# EUROPEAN PATENT APPLICATION

(11) **EP 3 193 298 A1**
(43) Date of publication of application: **19.07.2017**
(21) Application number: 14892878.1
(22) Date of filing: 12.09.2014
(51) Int. Cl.: G06Q 30/00

(54) **DEVICE AND SYSTEM FOR GENERATING ELECTRONIC CERTIFICATE**

(71) Applicant: Shenzhen Cifpay Network Bank Technology Co., Ltd., Shenzhen, Guangdong 518000 (CN)
(72) Inventor: ZHANG, Yi, Shenzhen Guangdong 518000 (CN)
(74) Representative: ZHAOffice SPRL
(86) International application number: PCT/CN2014/086461
(87) International publication number: WO 2016/037368

(57) **Abstract**

The disclosure relates to the field of internet. An electronic certificate generation device and system are disclosed, the device comprising: an input interface unit configured to input an item's logistics information, insurance information, and the item resource interface information; an electronic certificate generation unit configured to generate an electronic certificate based on the inputted information; an electronic certificate writing unit configured to write into the generated electronic certificate the negotiable logistics rule information and the negotiable transaction rule information; an electronic certificate reception and payment unit configured to set receipt and payment information for the electronic certificate; and an electronic certificate output unit configured to output the configured electronic certificate to a preset output terminal. As such, it is possible to get rid of the restrictions of specific sale places and transform the conventional transaction mode centered on the e-commerce or online stores relying on the reputation of third party platforms for transaction to an item-centered transaction mode relying on the attributes of the item itself, allowing the item to flow autonomously on the internet with high efficiency and thus making possible intelligent and autonomous transactions.

## Description

### FIELD OF THE DISCLOSURE

The present disclosure pertains to the field of internet, and more particularly to an electronic certificate generation device and system.

### BACKGROUND OF THE DISCLOURE

With the breakthrough of network, communication and information technologies, e-commerce has emerged and developed rapidly, increasingly changing people's lives and promoting the evolution of social business forms. On the whole, however, the real economy is still separated from e-commerce-articles are placed mostly in physical stores as physical entities, or displayed in network stores as pictures or photos, forming a "shop-centered" sales mode. The credibility, quality and authenticity of purchased items would be discriminated mainly on the size and reputation and other factors of the physical-store sellers or online-store sellers (i.e., web shopping malls, e-commerce central platforms), and bear scarce association with the quality of the item itself and the manufacturer. In real life, for example, people would hardly believe that the alleged branded goods sold on street markets are genuine; hence they would normally purchase in exclusive shops for original and genuine products. Since purchasers are more willing to believe the goods sold in exclusive shops are genuine, namely, the traditional purchase and sale are relied primarily on a specific sale place for "shop-centered" item transactions. The actual situation, however, turns out to be that even branded exclusive shops and large e-commerce platforms selling high-imitation counterfeits are often disclosed and seen on newspapers and other medias.

Internet transactions are remote online transactions with the purchaser and the seller set back to back. In view of this, it would be necessary to design in network e-commerce a system or device associating all the genuine information of items and complete transaction rules with the services and transactions within the transaction events, creating an autonomous transaction environment by giving intelligence to the items, and consequently shifting the transaction mode from "shop-centered" to "item-centered". More specifically, it doesn't matter who sells the items, but who manufactures and provides these items in order that the customers can purchase genuine goods provided by the original manufacturers. Meanwhile, a large number of real-economy producers can attach on the items an autonomous and intelligent transaction electronic certificate to realize direct marketing across the entire web scale.

### SUMMARY OF THE DISCLOSURE

A primary technical issue to be addressed by the present disclosure is, directed to the abovementioned problems of the prior art of the flow of goods being restricted by specific sale places, inadequate integration and recordation mechanisms for transaction information, imperfect logistics verification mechanisms for receiving and dispatching goods, and disability of performing entire intelligent and autonomous goods transaction, to provide an electronic certificate generation device and system.

A technical solution adopted by the present disclosure for resolving its technical issue is to construct an electronic certificate generation device, the device comprising:
an input interface unit, being configured to input an item's logistics information and the information of an item resource interface that is used to obtain the item's attribute information, and to feed the inputted information to a preset input terminal;
an electronic certificate-generation unit configured to generate electronic certificates separately or in batch based on the inputted information;
an electronic certificate writing unit configured to write into the generated electronic certificate the negotiable logistics rule information and negotiable transaction rule information, and to set issuance and recall time of the written electronic certificate and set the transaction management information;
an electronic certificate receipt and payment unit, being configured to set receipt and payment information for the electronic certificate;
an electronic certificate output unit configured to output the configured electronic certificate to a preset output terminal.

In the device according to the present disclosure, the input interface unit comprises:
an access-confirmation module configured to, based on an access number and an access key, to confirm the access of the input terminal;
an identity-verification module configured to verify the identity information of the input terminal, where the identity information comprises at least an account and a password;
an input module configured to enable the input through the input terminal the item's logistics information and the item resource interface information, to connect to an item resource terminal based on the item resource interface information to input the item's attribute information separately or in batch, and to feed the inputted information back to the input terminal.

In the device according to the present disclosure, the device further comprises a storage module-configuration unit.

The storage module-configuration unit is configured to set a storage module for the electronic certificate, the storage module being used to store the inputted information, the written information and the configuration information.

In the device according to the present disclosure, the device further comprises a query unit and a statistical unit.

The query unit is configured to generate index information for information stored in the storage module, and to query the electronic certificate and the information stored therein based on the index information.

The statistical unit is configured to generate statistical information based on the index information.

In the device according to the present disclosure, the electronic certificate writing unit comprises:
a logistics rule writing module, being configured to write the negotiable logistics rule information;
a transaction rule writing module, being configured to write the negotiable transaction rule information.

In the device according to the present disclosure, the electronic certificate writing unit further comprises:
an insurance rule writing module, being configured to write the negotiable insurance rule information;
a public-rights rule writing module, being configured to write the negotiable public rights rule information, where the public rights rule information is the identification information and/or item proprietary information and/or authentication information and/or transaction status information and/or registration information;
a rebate rule writing module, being configured to write the negotiable rebate rule information.

In the device according to the present disclosure, the transaction management information comprises the dispatch-compliance information, remittance-request information, returns-receipt information and returns-dispatch information.

The electronic certificate generation device as disclosed above has the following beneficial effects: the device can be used to generate an electronic certificate corresponding to an item and suitable for circulation on the internet, so as to get rid of the restrictions of specific sale places, thus achieving an intelligent and autonomous item-centered transaction mode.

In another aspect, the present disclosure provides an electronic certificate generation system which comprises an electronic certificate generation device and an item center server connected to the electronic certificate generation device.

The electronic certificate generation device comprises:
an input interface unit, being configured to input an item's logistics information and the information of an item resource interface that is used to obtain the item's attribute information, and to feed the inputted information to a preset input terminal;
an electronic certificate generation unit configured to generate electronic certificates separately or in batch based on the inputted information;
an electronic certificate writing unit configured to write into the generated electronic certificate the negotiable logistics rule information and negotiable transaction rule information, and to set issuance and recall time of the written electronic certificate and set the transaction management information;
an electronic certificate receipt and payment unit, being configured to set receipt and payment information for the electronic certificate;
an electronic certificate output unit configured to output the configured electronic certificate to a preset output terminal.

The item center server is configured to issue the electronic certificate.

In the system according to the disclosure, the input interface unit comprises:
an access-confirmation module, being configured to, based on an access number and an access key, send request information to the item center server, and to, after the item center server acknowledges the request information, confirm the access of the input terminal;
an identity-verification module, being configured to input the identity information of the input terminal to allow the item center server to verify the identity information;
an input module, configured to enable, after the item server authenticates the identity information, the input through the input terminal the item's logistics information and the item resource interface information, to connect to an item resource terminal based on the item resource interface information to input the item attribute information separately or in batch, and to feed the inputted information back to the input terminal.

In the system according to the present disclosure, the electronic certificate generation device further comprises a storage module configuration unit.

The storage module configuration unit is configured to set a storage module for the electronic certificate, the storage module being used to store the inputted information, the written information and the configuration information.

The electronic certificate generation system as disclosed above has the following beneficial effects: the system can be used to generate an electronic certificate which corresponds to the item and is suitable for circulation on the internet to get rid of the restrictions of specific sale places, thus transforming the conventional e-commerce-centered mode relying on the business reputation of third-party e-commerce platforms (or online stores) and reference to pictures or photos for transaction to an item-centered transaction mode where an electronic certificate is used to rely on the attributes of the item itself such as the manufacturer, the product's raw material, etc. so as to allow the items to flow on the internet autonomously with high efficiency, and meanwhile perfecting the logistics sign-to-receive mechanisms and thus combining the item-centered transaction mode to effectuate fully intelligent and autonomous transactions.

### BRIEF DESCRIPTION OF THE DRAWINGS

FIG. 1 is a block diagram illustrating an electronic certificate generation device according to an embodiment of the disclosure.
FIG. 2 is a flow chart illustrating the workflow of an electronic certificate generation device according to an embodiment of the disclosure.
FIG. 3 is a block diagram illustrating an electronic certificate generation device according to an embodiment of the disclosure.
FIG. 4 is a schematic diagram illustrating an electronic certificate generation system according to an embodiment of the disclosure.
FIG. 5 is a flow chart illustrating the generation and issuance of an electronic certificate according to the disclosure.

### DETAILED DESCRIPTION OF THE DISCLOSURE

To enable a clearer understanding of the technical features, objectives and effects of the disclosure, the accompanying drawings will be referenced to describe the specific embodiments of the disclosure in detail.

The present disclosure provides an electronic certificate generation device and system, which is intended to achieve a fully intelligent system featured "bank guarantee, inspection according to the list, cash on delivery". The employ of the electronic certificate enables the transaction of goods or services to be "buying and selling directly connected". Namely, the goods are dispatched directly from the manufacturer and the payment is collected automatically, thus guaranteeing genuine goods to be sold from the source and making the transactions more secure and reliable. A public rights module can further be added to facilitate the regulatory authorities to supervise the dynamic flow of goods to ensure their qualities. The electronic certificate can further instruct the goods entity to be delivered to a designated receiving location, enabling the remittance payment to be evidence-based and thus ensuring the rights and interests of both sides-the purchaser and the seller, consequently realizing the "cash on delivery" in e-commerce. The electronic certificate can be further used to pre-sell and pre-release services and the products which are yet or being manufactured, improving the rate of capital returns. In addition, the electronic certificate totally transforms the conventional e-commerce platform-centered mode of transaction relying on the business reputation of third e-commerce platforms (or online stores) and reference to pictures or photos, enabling the goods to flow autonomously on the internet with high efficiency, finally effectuating intelligent and autonomous transactions and thus creating an item-centered transaction mode. Via this system a business can dynamically record into the electronic certificate the item's flow information with respect to existing services and the goods expected to be produced or having been produced, and present the same in e-commerce which would allow the business to exchange a future income for an immediate cash income, greatly improving in capital turnover the liquidity shortage of goods or services to meet the businesses' financing requirements, accelerating the capital turnover and boosting the development of social economy.

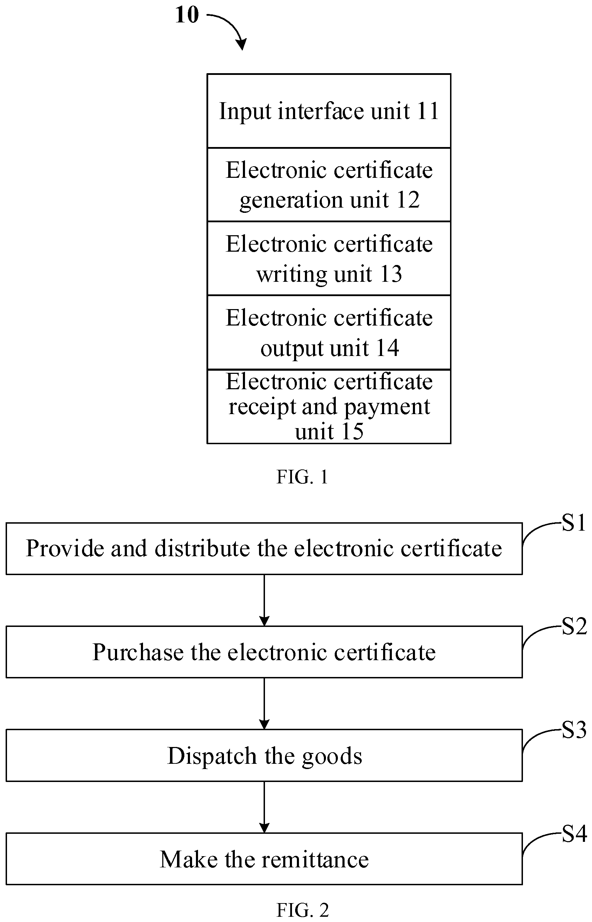

FIG. 1 is a block diagram illustrating an electronic certificate generation device 10 according to a first embodiment of the present disclosure. Referring now to FIG. 1, the device comprises an input interface unit 11, an electronic certificate generation unit 12, an electronic certificate writing unit 13, and an electronic certificate output unit 14. Information of the various units of the electronic certificate generation device 10 can be synchronized therebetween.

The logistics information and insurance information of the goods may be inputted through the input interface unit 11, and the information of the item resource interface that can be used to obtain the item's attribute information can also be inputted through the input interface unit 11, which may feed the information inputted above back to a preset input terminal. The electronic certificate generation unit 12 may generate electronic certificates separately or in batch based on the inputted information. The electronic certificate writing unit 13 may continually write information into the generated electronic certificate, for example, negotiable logistics rule information, negotiable insurance rule information, negotiable transaction rule information, negotiable rebate rule information, and so on. The electronic certificate writing unit 13 may further set for the electronic certificate the issuance and recall time and set the transaction management information and write this information into the above mentioned electronic certificate. Specifically, the transaction management information mentioned herein comprises the dispatch-compliance information, remittance-application information, returns-receipt information and returns-dispatch information. In addition, the electronic certificate receipt and payment unit 15 may be configured to set receipt and payment information for the electronic certificate.

It should be appreciated that the "write" herein is generally irreversible, namely the electronic certificate cannot be manipulated, specifically, information can only be written into the electronic certificate and the information already present or written in the electronic certificate cannot be modified or deleted. Based on practical needs, of course, permissions can be set to modify partially the electronic certificate. For example, if a manual entry error occurs, then the electronic certificate can be modified accordingly.

Upon completion or partial completion of the electronic certificate, it can be outputted through the electronic certificate output unit 14 to a preset output terminal. The output terminal is preferably a digital display platform, for example, an electronic warehouse. As such, the customer may easily obtain the electronic certificate through the internet, and perform intelligent interactions with the goods via the electronic certificate.

Next, a complete method for implemention of the electronic certificate generation device will be given below.

Referring now to FIG. 2, there is shown a flow chart illustrating the workflow of an electronic certificate generation device according to the present disclosure, the workflow comprising four primary steps as follows:

S1: Providing and issuing the electronic certificate. The electronic certificate generation device may provide an electronic certificate which is approved and issued by the host system set within a bank. More specifically, the "approval and issuance" mentioned herein refers to writing into the electronic certificate the information of beneficiary bank account and the electronic signature of the bank or of a payment institution. The approved and issued electronic certificate may be transmitted to an electronic warehouse which may issue the electronic certificate via the internet, so as to display the electronic certificate to the customer who would meanwhile obtain the electronic certificate over the electronic warehouse. Typically, the electronic warehouse herein can be an independent website, for example, an e-commerce platform or an official website platform belonged to certain organization. The electronic warehouse, of course, can be installed in a personal microblog, WeChat and the like social networking platforms.

More specifically, one-to-one mapping relations would be established between the data of the electronic warehouse and data of the bank host system. That is, the data of the electronic certificate is synchronized or partially synchronized between the electronic warehouse and the bank host system. It should be noted that the entity generating the electronic certificate may be a manufacturer or a distributor or a natural person.

S2: Purchasing the electronic certificate. The customer may obtain the electronic certificate via a client terminal connected to the above mentioned electronic warehouse, and send request information to the bank host system with a payment request for an amount corresponding to the item's attribute information. The bank host system may alter the requested payment to a requested-status, and a logistics terminal may prepare for transferring the item corresponding to the item attribute information. It should be noted that the "requested-status" herein refers to freezing the funds in the customer's account or temporarily transfer the funds to a third party for guarantee. It can also be understood as freezing the amount of deposit or credit limit, or transferring the amount of deposit or the credit limit to a preset guarantee account, that is, temporarily freezing the credit limit (with respect to a credit card) or amount of deposit (with respect to a debit card) of the purchaser's bank card, or transferring the credit limit or deposit amount to a preset guaranteed account, which may be taken as a kind of underwriting.

S3: Dispatching the goods. The logistics terminal may guide the goods to be transferred to the destination location.

S4: Making the payments. The bank host system may, after receiving the goods-receipt information from the logistics terminal, remit the amount in the requested-status to the account corresponding to the receiving & settling information.

It should be appreciated that in step S1, the information that can be written into the electronic certificate comprises, but is not limited to, transaction information. The electronic certificate may be stored in a contents provider server, where the electronic certificate comprises at least the item attributes containing the name and the amount, and the receiving & settling information of at least one account. As a preferred solution of the current embodiment, the electronic certificate may be approved and issued by the bank host system, which may, after issuing the electronic certificate, further write the selectable logistics support information, and send the electronic certificate to an electronic warehouse and/or the contents provider server that is connected to the bank host system. The electronic warehouse is configured to store the electronic certificate and distribute it through the internet. That the bank host system's generating the electronic certificate is in essence to establish an electronic certificate with the recordance of all the transactions.

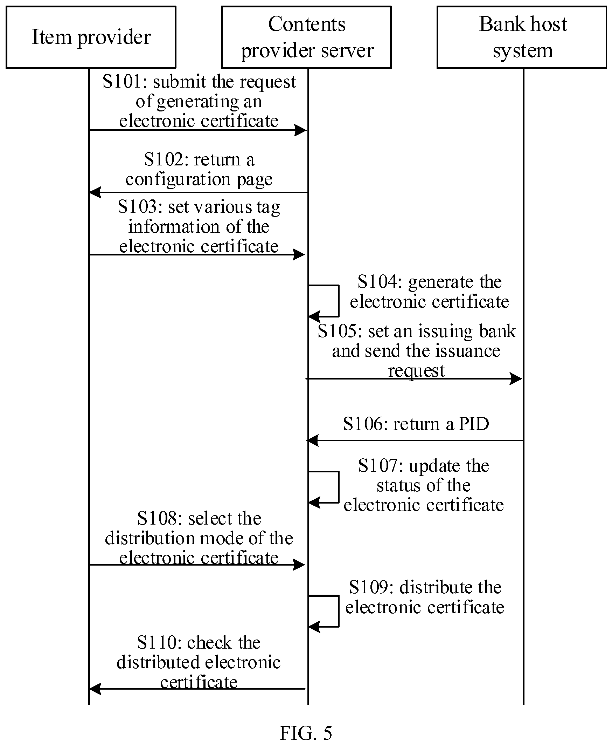

Referring now to FIG. 5, specifically, there shows a flow chart illustrating the generation and issuance of an electronic certificate according to the present disclosure, hence a preferred flow chart of step S1 comprises the following steps:
S101: submitting, by the item provider, to the contents provider server a request of generating an electronic certificate.

Typically, the item provider may complete configurations of the items on a local electronic terminal, and then submit the request of generating the electronic certificate to the contents provider server. As such, source files of the generated electronic certificate can be stored directly on the local electronic terminal, and needs not to be stored in the contents provider server or the bank host system. Further, the local electronic terminal may only need to transmit a signal for accessing the source files to the contents provider server or to the bank host system.

Alternatively, the item provider may connect the local electronic terminal directly to the contents provider server through the internet and complete the configurations of items online, and then submit the request of generating the electronic certificate to the contents provider server. Additionally, in the case the electronic certificate is generated online, the electronic certificate may be stored directly into the contents provider server, while in the case the electronic certificate is generated offline, the item's configuration can also be completed to request for generating the electronic certificate, which may be stored in the local electronic terminal offline.

S102: Receiving, by the contents provider server, the request and returning a configuration page to the item provider.

S103: Setting, by the item provider, various tag information of the electronic certificate on the configuration page, namely setting the transaction information of the electronic certificate, which comprises at least the item attributes containing the name and amount, and the receiving & settling information of at least one account.

S104: Generating, by the contents provider server, an electronic certificate template configured with the item information.

S105: Configuring, by the item provider, an issuing bank of the bank host system. The bank host system is not restricted to the issuing bank, and can also be other platforms on the internet that supports circulation of funds. Meanwhile, the contents provider server may send an issuance request of the item provider to the bank host system. This step can be accomplished by setting an approval and issuance module in the bank host system. The approval and issuance module is configured to, after approving and issuing the electronic certificate, write into the electronic certificate the selectable logistics support information, generate the electronic certificate, and send the electronic certificate to the electronic warehouse and/or contents provider server.

S106: Receiving, by the bank host system, the legal request to complete the approval and issuance, and returning to the contents provider server a PID.

The "PID" referenced herein is a port ID, namely the "port number". A PID is generally composed of 8 bits of port priority and the port interface number, where the port interface number accounts for the lower bits, and the default port priority is 128.

The item provider may, of course, submit the request of issuing the electronic certificate directly to the bank, and the bank host system may return a PID to the item provider after verifying the identity information of the item provider. It should be appreciated that, the item provider may also submit the request of issuing the electronic certificate via the contents provider server to the bank host system in order to obtain a PID, which is also feasible. In addition, the bank host system may also return, before step S101, a PID to the contents provider server. Namely, the bank host system may return a PID to the contents provider server before the item provider submits the request of issuing the electronic certificate to the contents provider server.

S107: Updating, by the contents provider server, the status of the electronic certificate to be approved and issued, and synchronizing the information to the item provider.

S108: Selecting, by the item provider, the distribution mode for the electronic certificate, which is generally a preset channel for distributing the electronic certificate. The channel may be a link, an advertisement, or may also be embedded in an application, and so on. In this step an electrical connection may be added to the release port of the item provider, which is further configured to connect to the internet to release the electronic certificates.

S109: Distributing, by the contents provider server, the electronic certificates relying on the distribution channel.

S110: Checking, by the item provider or other internet users, the released electronic certificate over the electronic terminal connected to the internet.

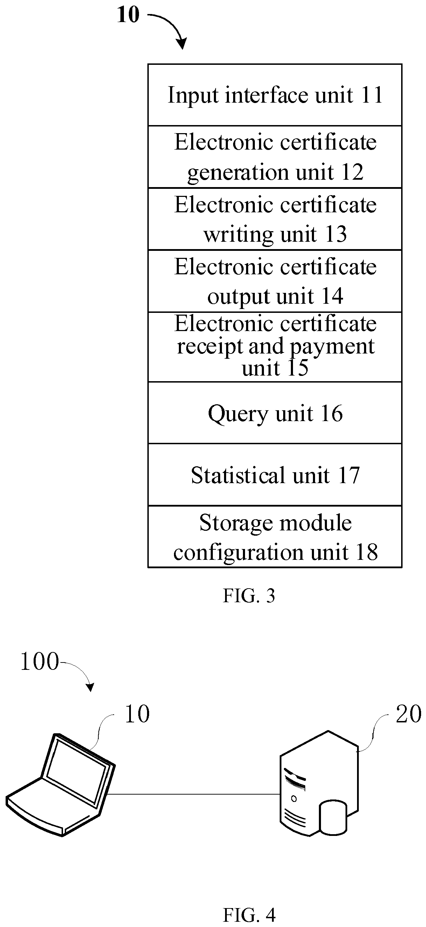

In addition, referring now to FIG. 3, there is shown a block diagram illustrating an electronic certificate generation device 10 according to a second embodiment of the present disclosure. This embodiment differs from the previous embodiment in that, the device according to the current embodiment further comprises a storage module configuration unit 18, a query unit 16 and a statistical unit 17. The storage module configuration unit 18 is configured to set a storage module for the electronic certificate, the storage module being used to store the inputted information, the written information, and the configuration information. The query unit 16 is configured to generate index information for the information stored in the storage module, and to query the electronic certificate and the information stored therein based on the index information. The statistical unit 17 is configured to generate statistical information based on the index information.

More specifically, the input interface unit 11 comprises:
an access-confirmation module configured to, based on an access number and an access key, to confirm the access of the input terminal;
an identity-verification module, being configured to verify the identity information of the input terminal, where the identity information comprises the account and password, and may certainly comprises, but is not limited to, the port ID and device ID such as an IMEI according to practical needs.
an input module, configured to enable the input through the verified input terminal the items' logistics information and the item resource interface information, to connect to an item resource terminal based on the item resource interface information to input the item's attribute information in batch, and to feed the inputted information back to the input terminal. It should be appreciated that, the input terminal can also input insurance information so as to guarantee the rights and interests of both transaction sides. The item attribute information can also be entered one by one when needed, and the inputted information may be fed back to the input terminal.

More specifically, the electronic certificate writing unit 13 comprises:
a logistics rule writing module, being configured to write negotiable logistics rule information;
an insurance rule writing module, being configured to write negotiable insurance rule information.

The electronic certificate writing unit 13 can, of course, further comprise:
a transaction rule writing module, being configured to write negotiable transaction rule information;
a rebate rule writing module, being configured to write negotiable rebate rule information.

Preferably, the electronic certificate writing unit 13 further comprises:
a public rights rule writing module, being configured to write negotiable public rights rule information.

It should be noted that, generally, the electronic certificate writing unit 13 cannot be manipulated, namely, information can only be written into the electronic certificate writing unit 13, but the information already written therein cannot be modified or deleted. Only under special circumstances (for example, input error indeed occurs) can part of the information be modified through the port with specific permissions. The current embodiment preferably furnishes the contents provider server and/or the bank host system the privilege to partially modify the electronic certificate writing unit 13.

The beneficial effects of the present embodiment follows as below: this embodiment can generate an electronic certificate that corresponds to the item and is suitable for circulation on the internet, and thus can get rid of the restrictions of exclusive distribution platforms, thus effectuating an item-centered transaction mode to achieve fully intelligent goods transactions.

FIG. 4 is a schematic diagram illustrating an electronic certificate generation system 100 according to the present disclosure. The system comprises an electronic certificate generation device 10 and an item center server 20 connected to the electronic certificate generation device 10, as is shown in FIG. 4.

Referring also to FIG. 1, the electronic certificate generation device 10 comprises:
an input interface unit 11 configured to input the items' logistics information, insurance information and the information of an item resource interface that can be used to obtain the item's attribute information, and to feed back the inputted information to a preset input terminal;
an electronic certificate generation unit 12 configured to generate electronic certificates separately or in batch based on the inputted information;
an electronic certificate writing unit 13 configured to write into the generated electronic corticated the negotiable logistics rule information, the negotiable insurance rule information, the negotiable transaction rule information and the negotiable rebate rule information;
an electronic certificate receipt and payment unit 15, being configured to set receipt and payment information for the electronic certificate;
an electronic certificate output unit 14, being configured to set for the electronic certificate the issuance and recall time and the transaction management information, and to input the configured electronic certificate to the item center server. Specifically, the transaction management information comprises the dispatch-compliance information, remittance-application information, returns-receipt information, and returns-dispatch information.

The item center server 20 is configured to store and distribute the electronic certificates.

Preferably, the input interface unit 11 comprises:
an access-confirmation module, being configured to, based on an access number and an access key, send request information to the item center server, and after the item center server acknowledges the request information, to effectuate the access of the input terminal;
an identity-verification module, being configured to verify the identity information of the input terminal in order that the item center server authenticates the identity information, where the identity information comprises, but is not limited to, the account and password, and can certainly comprises, but is not limited to, the port ID and device ID such as an IMEI according to practical needs.
an input module, configured to enable, after the item server authenticates the identity information, input through the input terminal the items' logistics information and insurance information and the item resource interface information, to connect to an item resource terminal based on the item resource interface information to input the item attribute information in batch, and to feed the inputted information back to the input terminal.

Preferably, the electronic certificate generation device 10 further comprises a storage module configuration unit 18, a query unit 16 and a statistical unit 17.

The storage module configuration unit 18 is configured to set a storage module for the electronic certificate, wherein the storage module is used to store the inputted information, the written information and the set up information.

The query unit 16 is configured to generate index information for the information stored in the storage module, and to query the electronic certificate and the information stored therein based on the index information.

The statistical unit 17 is configured to generate statistical information based on the index information.

The electronic certificate writing unit 13 comprises:
a logistics rule writing module, being configured to write negotiable logistics rule information, which may instruct subsequent associated logistic matters.
an insurance rule writing module, being configured to write negotiable insurance rule information, which is used to set up an electronic insurance contract for the electronic certificate. The insurance rule information can guarantee the rights and interests of both transaction parties and can thus reduce to the largest extent in the transaction process the loss caused by unexpected situations. In addition, an insurance module can also be configured there recorded an electronic insurance contract, where the insurance is not limited to a specific type of insurance. The insurance module can furnish security for the delivery of goods, and compensate for the loss caused by transaction failure, thus guaranteeing the interests of both the purchaser and the seller.
an transaction rule writing module, being configured to write negotiable transaction rule information, whereby both the transaction parties may agree on how to perform the transaction or in what way perform the transaction.
a rebate rule writing module, being configured to write negotiable rebate rule information. The seller may return to the purchaser a certain percentage of the item funds paid by the purchaser. In addition, with regards to the transactions where there is a third party, for example, an agent, the commission rule of the agent can be agreed on in order to guarantee the interests of the third party. More specifically, the agent may collect a certain number of electronic certificates from the electronic warehouse, which is commonly known as "stock goods", and then distribute the collected electronic certificates to the customer to make a matched transaction therewith so that the agent may obtain a corresponding commission based on agreed commission rules after the transaction.
a public rights rule writing module, being configured to write negotiable public rights rule information. The public rights rule information may be the identification information and/or item proprietary information and/or authentication information and/or transaction status information and/or registration information. The public rights module may be connected to institutions of public rights, thus guaranteeing the authenticity and authority of the transaction information.

It should be noted that, generally, the electronic certificate writing unit 13 cannot be manipulated, namely, information can only be written into the electronic certificate writing unit 13, but the information already written thereto cannot be modified or deleted. Only under special circumstances (for example, input error indeed occurs) can part of the information be modified through the port with specific permissions. The current embodiment preferably furnishes the contents provider server and/or the bank host system with the privilege to partially modify the electronic certificate writing unit 13.

The current embodiment has the following beneficial effects: the system can be used to generate an electronic certificate which corresponds to the item and is suitable for circulation on the internet to get rid of the restrictions of exclusive distribution platforms, thus transforming the conventional e-commerce-centered mode relying on the business reputation of third-party e-commerce platforms and reference to pictures or photos for transaction to an item-centered transaction mode where an electronic certificate is used to rely on the attributes of the item itself such as the manufacturer, the raw material, etc., and meanwhile perfecting the logistics sign-to-receive mechanisms and thus combining the item-centered transaction mode to effectuate fully intelligent and autonomous transactions.

Above the embodiments of the present disclosure are described with reference to the accompanying drawings, but the present disclosure is not limited to the above specific embodiments, which are merely illustrative and shall not be construed in a limiting sense. Those of ordinary skill in the art may, by the inspiration of the disclosure, make a large number of variations without departing from the spirit of the disclosure and scope claimed by the claims, which shall all be covered within the protection of the disclosure.

## Claims

1. An electronic certificate generation device, comprising:
an input interface unit, being configured to input an item's logistics information and information of an item resource interface that is used to obtain the item's attribute information, and to feed the inputted information back to a preset input terminal;
an electronic certificate generation unit configured to generate electronic certificates separately or in batch based on the inputted information;
an electronic certificate writing unit configured to write into the generated electronic certificate the negotiable logistics rule information and negotiable transaction rule information, and to set issuance and recall time for the written electronic certificate and set transaction management information;
an electronic certificate receipt and payment unit, being configured to set receipt and payment information for the electronic certificate; and
an electronic certificate output unit configured to output the configured electronic certificate to a preset output terminal.

2. The device according to claim 1, wherein the input interface unit comprises:
an access-confirmation module configured to confirm the access of the input terminal based on an access number and an access key;
an identity-verification module configured to verify the identity information of the input terminal, where the identity information comprises at least an account and a password; and
an input module, configured to enable the input terminal to input the item's logistics information and the item resource interface information, to connect to an item resource terminal based on the item resource interface information to input the item's attribute information separately or in batch, and to feed the inputted information back to the input terminal.

3. The device according to claim 1, further comprising a storage module-configuration unit configured to set a storage module for the electronic certificate, the storage module being used to store the inputted information, the written information and the set up information.

4. The device according to claim 3, further comprising a query unit and a statistical unit, wherein the query unit is configured to generate index information for the information stored in the storage module, and to query the electronic certificate and the information stored therein based on the index information, and the statistical unit is configured to generate statistical information based on the index information.

5. The device according to claim 1, wherein the electronic certificate writing unit comprises:
a logistics rule writing module, being configured to write negotiable logistics rule information; and
a transaction rule writing module, being configured to write negotiable transaction rule information.

6. The device according to claim 5, wherein the electronic certificate writing unit further comprises:
an insurance rule writing module, being configured to write negotiable insurance rule information;
a public rights rule writing module, being configured to write negotiable public rights rule information, wherein the public rights rule information comprises at least one of identification information, item proprietary information, authentication information, transaction status information and registration information; and
a rebate rule writing module, being configured to write negotiable rebate rule information.

7. The device according to any one of claims 1-6, wherein the transaction management information comprises dispatch-compliance information, remittance-application information, returns-receipt information and returns-dispatch information.

8. An electronic certificate generation system, comprising an electronic certificate generation device and an item center server connected to the electronic certificate generation device, wherein the electronic certificate generation device comprises:
an input interface unit, being configured to input an item's logistics information and information of an item resource interface that is used to obtain the item's attribute information, and to feed the inputted information back to a preset input terminal;
an electronic certificate generation unit configured to generate electronic certificates separately or in batch based on the inputted information;
an electronic certificate writing unit configured to write into the generated electronic certificate the negotiable logistics rule information and negotiable transaction rule information, and to set issuance and recall time for the written electronic certificate and set transaction management information;
an electronic certificate receipt and payment unit, being configured to set receipt and payment information for the electronic certificate; and
an electronic certificate output unit configured to output the configured electronic certificate to a preset output terminal;
wherein the item center server is configured to issue the electronic certificate.

9. The system according to claim 8, wherein the input interface unit comprises:
an access-confirmation module, being configured to send request information to the item center server based on an access number and an access key, and to confirm the access of the input terminal after the item center server acknowledges the request information;
an identity-verification module, being configured to input the identity information of the input terminal to allow the item center server to verify the identity information; and
an input module, configured to enable the input terminal to input the items' logistics information and the item resource interface information after the item server authenticates the identity information, to connect to an item resource terminal based on the item resource interface information to input the item attribute information separately or in batch, and to feed the inputted information back to the input terminal.

10. The system according to claim 8 or claim 9, wherein the electronic certificate generation device further comprises a storage module configuration unit configured to set a storage module for the electronic certificate, the storage module being used to store the inputted information, the written information and the configuration information.
